(19) Europäisches Patentamt
European Patent Office
Office européen des brevets

(11) **EP 2 366 999 A2**

(12) **EUROPEAN PATENT APPLICATION**

(43) Date of publication:
**21.09.2011 Bulletin 2011/38**

(51) Int Cl.:
*G01N 33/487* (2006.01)     *G01N 35/00* (2006.01)

(21) Application number: **11158646.7**

(22) Date of filing: **17.03.2011**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **18.03.2010 JP 2010063008**

(71) Applicant: **SYSMEX CORPORATION**
**Kobe-shi,**
**Hyogo 651-0073 (JP)**

(72) Inventor: **Asakura, Yoshihiro**
**Hyogo 651-0073 (JP)**

(74) Representative: **HOFFMANN EITLE**
**Patent- und Rechtsanwälte**
**Arabellastraße 4**
**81925 München (DE)**

(54) **Analyzing apparatus and calibration cartridge**

(57) An apparatus for analyzing a biological component in a test sample, comprising: a mounting part for selectively mounting a calibration cartridge and an analysis cartridge; a detection part for detecting a component included in a control sample accommodated in the calibration cartridge, the component included in the test sample accommodated in the analysis cartridge, and a biological component included in the analysis cartridge; and an analyzing part for analyzing the biological component included in the test sample based on a detection result of the component included in the control sample, a detection result of the component included in the test sample, and a detection result of the biological component included in the test sample detected by the detection part. A cardridge is also disclosed.

FIG.1

**Description**

FIELD OF THE INVENTION

The present invention relates to an analyzing apparatus and calibration cartridge.

BACKGROUND

There are known conventional analyzers for analyzing the biological components contained in a specimen collected from a living body, including humans.

For example, PCT International Publication No. WO 2010/013808 discloses an apparatus for measuring glucose/time area under the curve (AUC) of a subject based on the glucose concentration and electrolyte concentration obtained by measuring the glucose and electrolyte concentrations in a gel containing the collected interstitial fluid extracted through micropores formed in the skin of the subject. The detection unit and measuring unit of this apparatus are provided with a glucose measuring electrode that operates on glucose, and an electrolyte measuring electrode that operates on electrolytes. When measuring the electrolyte concentration, a voltage is applied to a gel by the electrolyte measuring electrode, the resulting current value is obtained, and the concentration of the electrolyte contained in the interstitial fluid is measured based on the relational expression between the obtained current value and the electrolyte concentration. When measuring the glucose concentration, on the other hand, a voltage is applied to the glucose measuring electrode, the resulting current value is measured, and the glucose concentration is measured based on the relational expression between the obtained current value and the glucose concentration. The apparatus disclosed in WO 2010/013808 calculates the glucose/time area under the curve (AUC) of the subject based on the glucose concentration and electrolyte concentration measured in this way.

In the electrolyte measuring electrode, variations may occur due to oxidation of the electrode, precipitate adhering to the electrode and the like. The apparatus disclosed in WO 2010/013808 measures the concentration of a minute amount of electrolyte contained in the gel based on the very small current value when a voltage is applied to the gel. Therefore, an error may occur in the measurement of the electrolyte concentration when there is a state of variance in the electrolyte measuring electrode, and there is concern that such an error may reduce the reliability of the glucose/time AUC calculation result.

SUMMARY

The scope of the present invention is defined solely by the appended claims, and is not affected to any degree by the statements within this summary.

(1) A first aspect of the present invention is an apparatus for analyzing a biological component in a test sample, comprising: a mounting part for selectively mounting a calibration cartridge which is configured for accommodating a control sample that includes a component of predetermined concentration, and an analysis cartridge which contains an analyzing reagent and is configured for accommodating a test sample; a detection part for detecting the component included in the control sample accommodated in the calibration cartridge, the component included in the test sample accommodated in the analysis cartridge, and the biological component included in the analysis cartridge; and an analyzing part for analyzing the biological component included in the test sample based on a detection result of the component included in the control sample, a detection result of the component included in the test sample, and a detection result of the biological component included in the test sample detected by the detection part. According to this apparatus, an analysis result of high reliability can be obtained.

(2) The apparatus of (1), further comprising: a supply part for supplying the control sample to the calibration cartridge.

(3) The apparatus of (2), wherein the supply part supplies a first control sample containing the component having a first concentration, and supplies a second control sample containing the component having a second concentration that is higher than the first concentration, to the calibration cartridge installed in the mounting part.

(4) The apparatus of (3), wherein the supply part supplies the second control sample after supplying the first control sample and detecting the component contained in the first control sample.

(5) The apparatus of any one of (1) to (4), wherein the analyzing part prepares a calibration curve based on the detection result of the component contained in the control sample, and analyzes the biological component contained in the test sample based on the calibration curve and the detection result of the component contained in the test sample. This configuration allows the calibration curve to be simply recalibrated by installation of the cartridge even when the sensors such as the electrodes in the detection unit have changed over time. Accordingly, it is usually possible to analyze biological components with high reliability even when there is a state of variance in the detection unit.

(6) The apparatus of (5), further comprising: a detection part for detecting the type of cartridge, wherein at least one of the calibration cartridge and the analysis cartridge is provided with an identification part for the detection part to identify the type of cartridge; and the analyzing part discriminates the type of cartridge installed in the mounting part based on the detection result of the detection part, and prepares the calibration curve when the cartridge installed in the mounting part is identified as the calibration cartridge, and the analyzing part discriminates that the cartridge installed in the mounting part is the analysis cartridge based on the detection result of the detection part, and analyzes the biological component contained in the test sample contained in the analysis cartridge.

(7) The apparatus of (6), wherein the calibration cartridge is provided with a first identification part, and the analysis cartridge is provided with a different second identification part; and the analyzing part discriminates that the cartridge installed in the mounting part is the calibration cartridge when the detection part detects the first identification part, and discriminates that the cartridge installed in the mounting part is the analysis cartridge when the detection part detects the second identification part. A control sample must be loaded in the calibration cartridge beforehand according to this configuration. Accordingly, the calibration cartridge can be reused.

(8) The apparatus of (6) or (7), wherein the identification part is a concavity formed in the surface of the cartridge; the detection part comprises a switch that is accommodatable in the concavity when the cartridge is installed in the mounting part; and the analyzing part discriminates the type of cartridge based on the state of contact between the switch and the cartridge.

(9) The apparatus of any one of (1) to (9), wherein the calibration cartridge comprises an optical system confirmation part for emitting light of a predetermined intensity and irradiating light of the predetermined intensity; the detection part comprises a light source for emitting light on the optical system confirmation part, and a light receiving part for receiving the light emitted from the optical system confirmation part; and the analyzing part confirms the condition of the detection part based on the amount of light received by the light receiving part.

(10) The apparatus of any one of (1) to (9), wherein the detection part comprises a first detection unit for detecting the component, and a second detection unit for detecting the biological component.

(11) The apparatus of (10), wherein the analyzing part prepares a calibration curve based on the detection result of the component contained in the control sample detected by the first detection unit, obtains the amount of the component contained in the test sample based on the calibration curve and the detection result of the component contained in the test sample detected by the first detection part, and analyzes the biological component contained in the test sample based on the detection result of the biological component contained in the test sample detected by the second detection part and the component contained in the test sample.

(12) The apparatus of (11), wherein the amount of the component is an amount of a sodium ion; and the detection result of the biological component is an amount of glucose.

(13) The apparatus of any one of (1) to (12), wherein the analyzing part calibrates the detection part based on the detection result of the component contained in the control sample, and obtains the detection result of the component contained in the test sample by the calibrated detection part detecting the component contained in the test sample accommodated in the analysis cartridge.

(14) A second aspect of the present invention is a calibration cartridge comprising: a holding part for accommodating a control sample containing a component of known concentration; and an identification part for identifying the type of cartridge. According to this configuration, a biological sample contained in a test sample in the analysis cartridge is analyzed using the calibration curve when the cartridge is removably installed in the component analyzer.

(15) The cartridge of (14), wherein the identification part is a concavity formed in a surface of the cartridge; and the concavity is a notch formed in the edge of the long side of a rectangular cartridge.

BRIEF DESCRIPTION OF THE DRAWINGS

FIG. 1 is a perspective external view showing an embodiment of the biological component analyzer of the present invention;

FIG. 2 is a brief cross sectional view of the tank of the biological component analyzer

FIG. 3 is a liquid circuit diagram of the biological component analyzer;

FIG. 4 is a perspective illustration of the interstitial fluid collection sheet used in the biological component analysis method of the present invention;

FIG 5 is a cross sectional view of the interstitial fluid collection sheet shown in

FIG. 4;

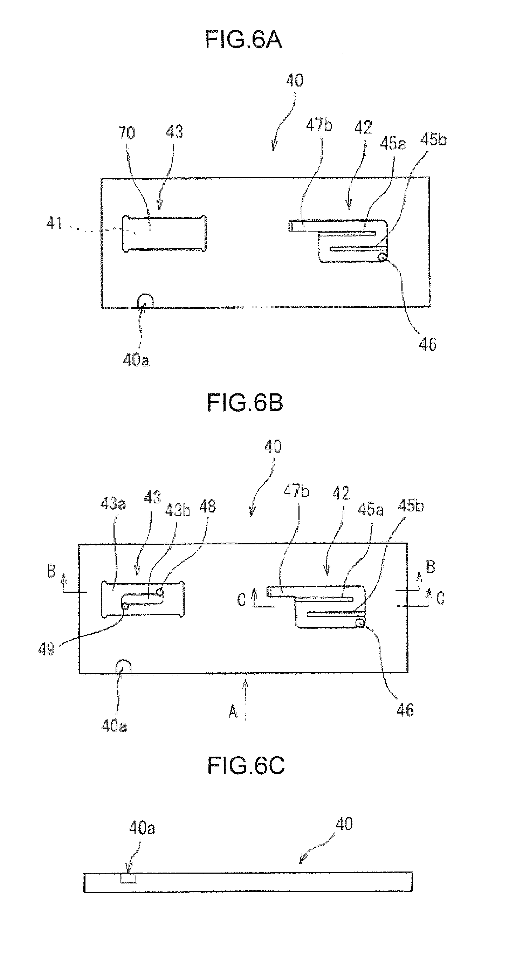

FIG. 6A is a plan view of an example of the analysis cartridge used in the biological component analyzer of the present invention, FIG. 6B is a plan view of the analysis cartridge with the optical waveguide member and glucose reactant removed from the analysis cartridge illustrated in FIG. 6A, and FIG. 6C is a side view of the analysis cartridge viewed from the A direction;

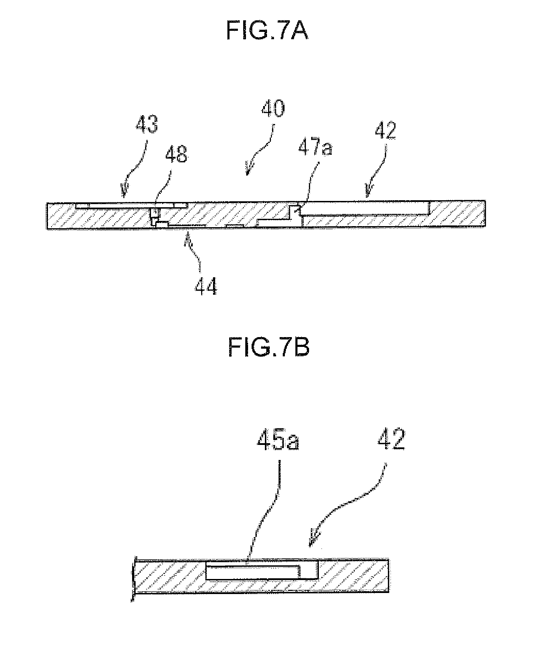

FIG. 7A is a cross sectional view on the B-B line of the analysis cartridge illustrated in FIG. 6, and FIG. 7B is a cross sectional view on the C-C line of same;

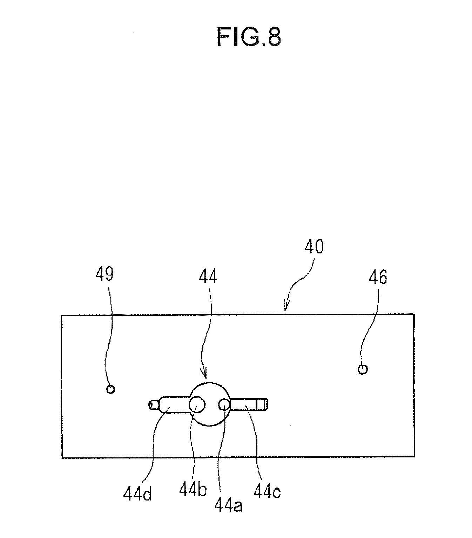

FIG. 8 is a bottom view of the analysis cartridge illustrated in FIG. 6;

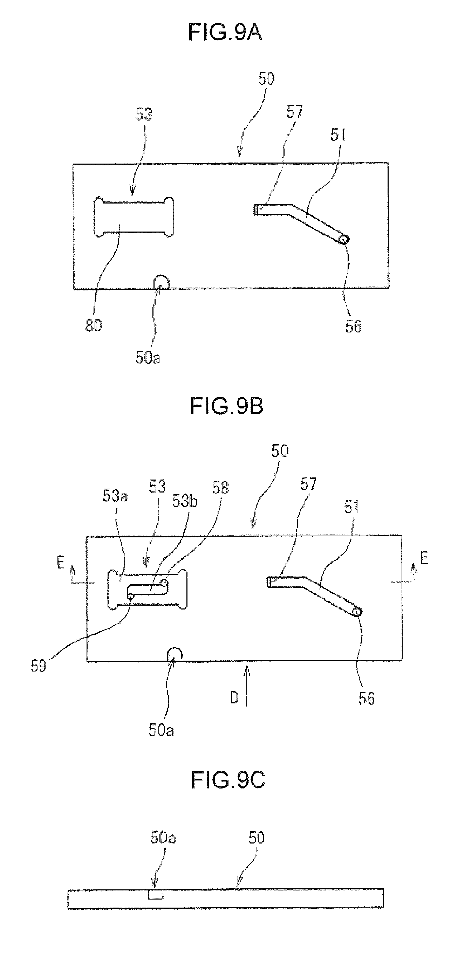

FIG. 9A is a plan view of an embodiment of the calibration cartridge of the present invention, FIG. 9B is a plan view of the calibration cartridge removed from the optical system confirmation unit, and FIG. 9C is a side view of the calibration cartridge viewed from the D direction;

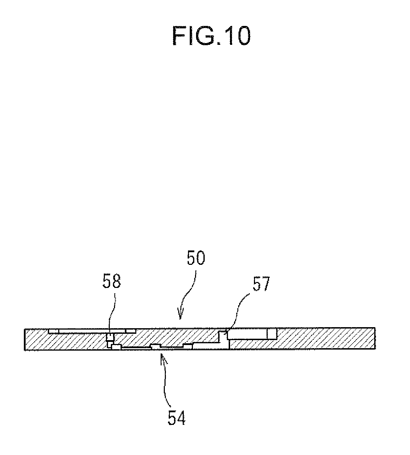

FIG. 10 is a cross sectional view on the E-E line of the calibration cartridge illustrated in FIG. 9;

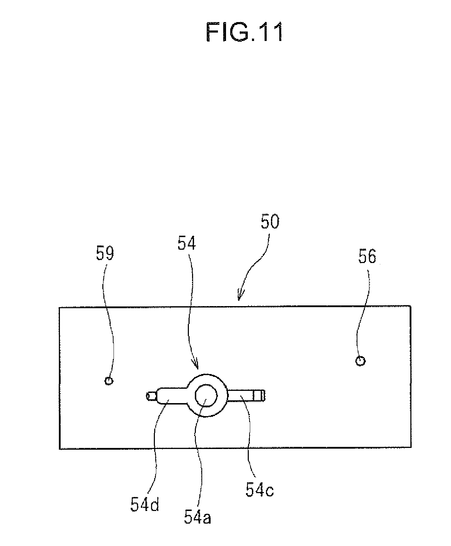

FIG. 11 is a bottom view of the calibration cartridge illustrated in FIG. 9;

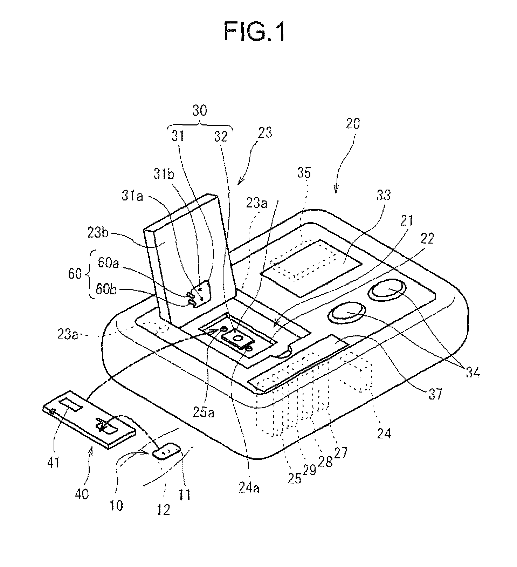

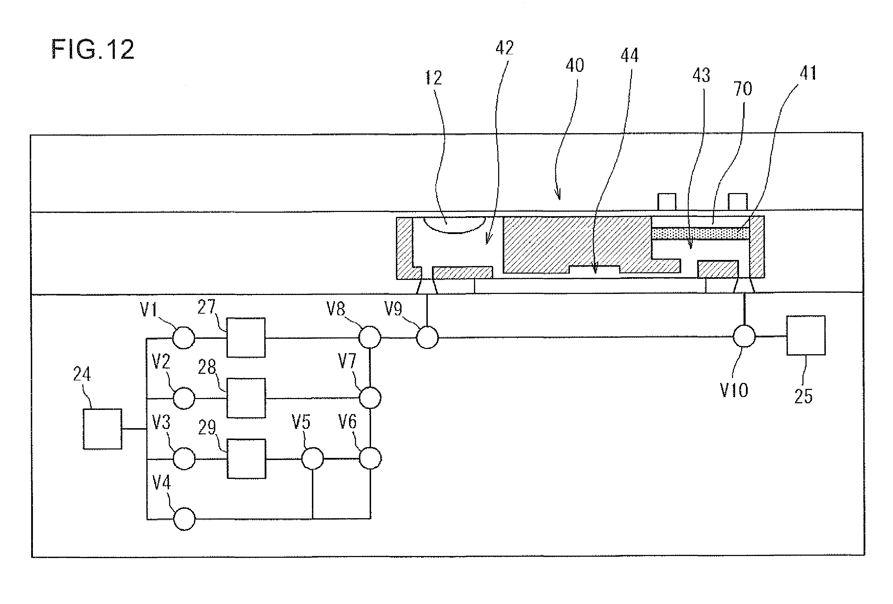

FIG. 12 is a cross sectional illustration showing the analysis cartridge installed in the biological component analyzer illustrated in FIG. 1;

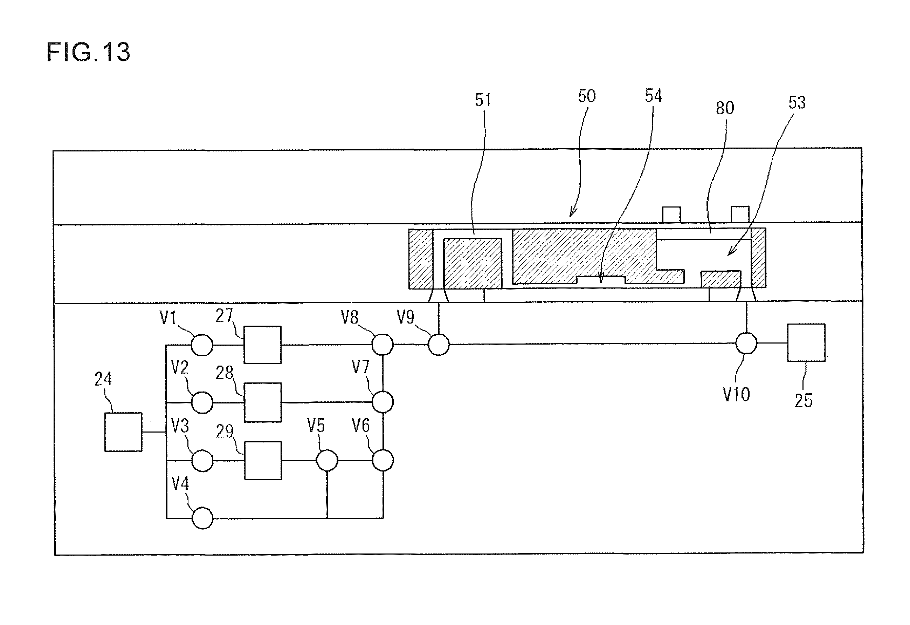

FIG. 13 is a cross sectional illustration showing the calibration cartridge installed in the biological component analyzer illustrated in FIG. 1;

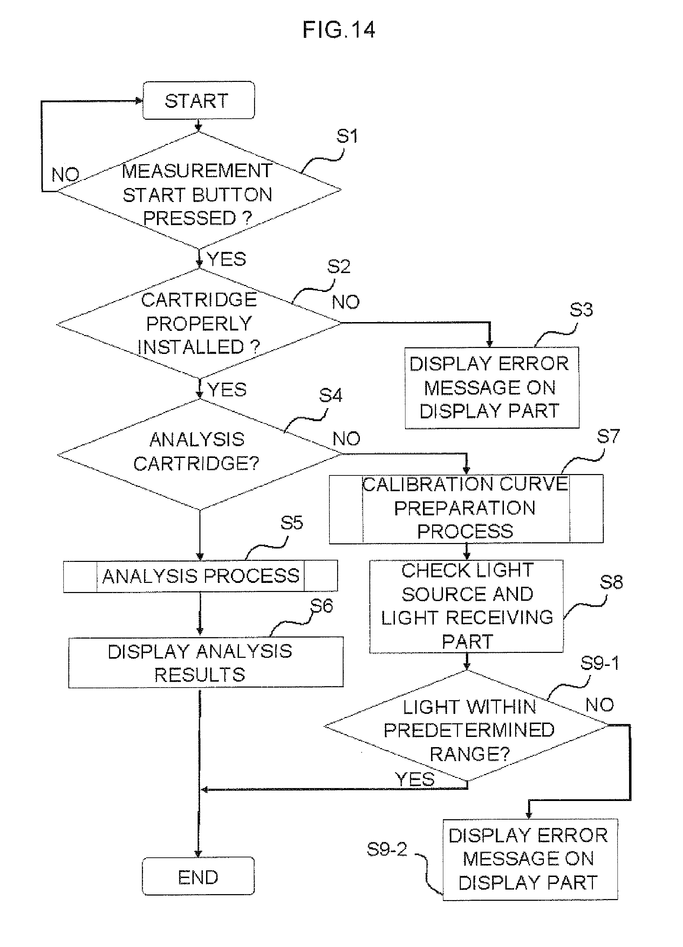

FIG. 14 is a flow chart of the biological component analysis method of the present invention;

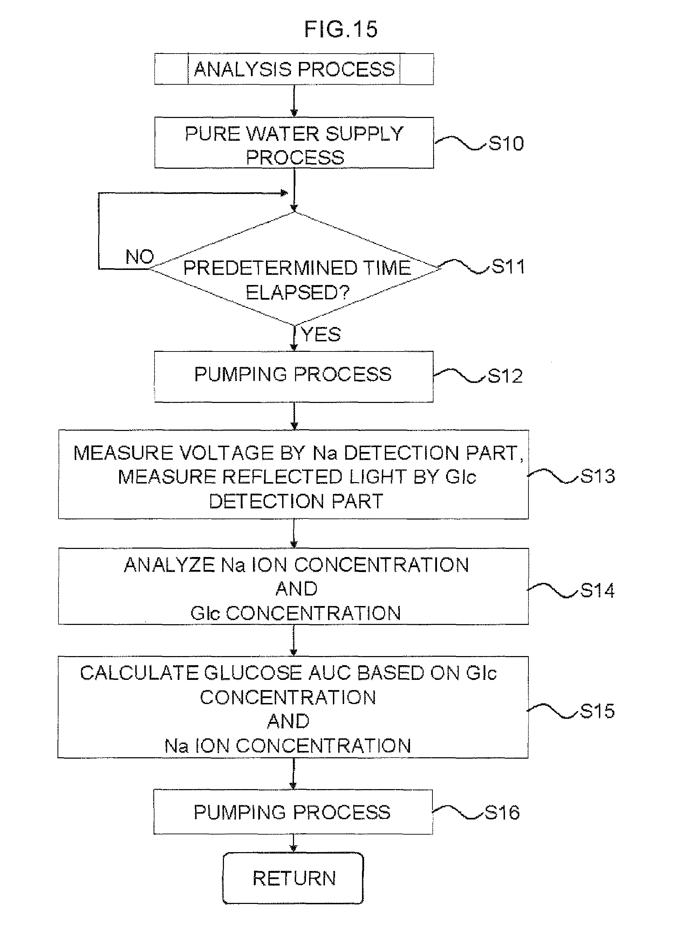

FIG. 15 is a flow chart of the analysis process;

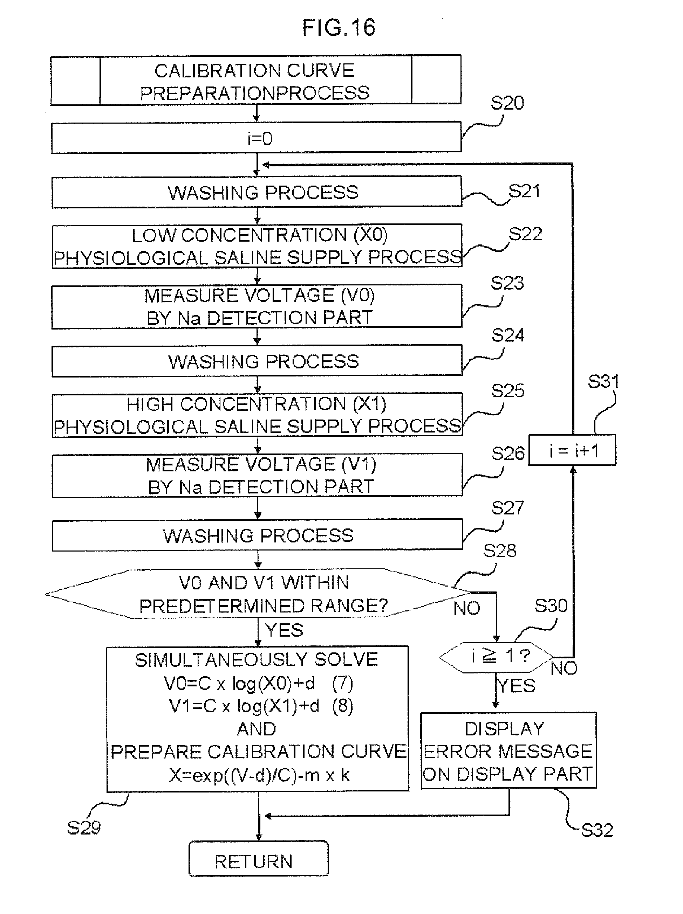

FIG. 16 is a flow chart of the calibration curve preparation process; and

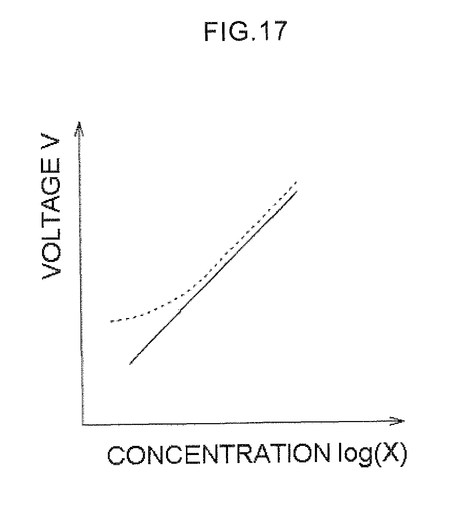

FIG. 17 illustrates the effect of interfering ions on measured concentrations.

## DETAILED DESCRIPTION OF THE EMBODIMENT

The embodiments of the analyzing apparatus and calibration cartridge are described in detail hereinafter with reference to the accompanying drawings.

[Biological Component Analyzer]

FIG. 1 is a perspective external view showing an embodiment of the biological component analyzer 20 of the present invention. The biological component analyzer 20 measures the glucose-time area under the curve (glucose AUC) of a subject based on the glucose concentration and sodium ion concentration in the interstitial fluid collected in a collecting body 12 which will be described later. The biological component analyzer 20 is mainly provided with a mounting part 22, detection part 30, control part 35 that includes an analysis part, a supply part 42, display part 33 for displaying measurement results and error messages and the like, and operation buttons for issuing measurement start instructions and the like.

The biological component analyzer 20 is provided with a thick rectangular chassis, and a concavity 21 is formed in the top plate on top surface of the chassis. The concavity 21 is provided with a mounting part 22 that is configured by a concavity that is deeper than the concavity 21. The concavity 21 is connected to a movable top plate 23 that has the same thickness and height as the side wall of the concavity 21. The movable top plate 23 is housed within the concavity 21, or raised from the housed state in the concavity 21 as shown in FIG. 1 by pivoting on the shaft 23a. The mounting part 22 has a size that allows the analysis cartridge 40 and calibration cartridge 50 (described later) to be housed (mounted) selectively.

The movable top plate 23 is supported on the shaft 23a so that a force is exerted in the direction of housing the top plate in the concavity 21. Accordingly, the analysis cartridge 40 or the calibration cartridge 50 placed in the mounting part 22 is pressed from above by the movable top plate 23. The back surface 23b of the movable top plate 23 is provided with two pin switches 60a and 60b that protrude from the back surface 23b, the pin switches 60a and 60b being configured by sensors for identifying the type of cartridge loaded in the mounting part 22, and detecting that the cartridge is properly loaded therein. The switches 60a and 60b are configured to be forced in the direction of separation from the back surface 23b of the movable top plate 23, and housed within the movable top plate 23 when pressed in the direction approaching the back surface 23b.

The detection unit 30 detects components contained in the interstitial fluid collected in the collecting body 12, and is provided with a glucose detecting part 21, and sodium ion detecting part 32.

The glucose detection part 31 is provided on the back side 23b of the movable top plate 23, that is, on the surface on the side facing the mounting part 22 when the movable top plate 23 is housed in the concavity 21. The glucose detection part 31 is provided with a light source 31a for irradiating light, and a light receiving part 31b for receiving the reflected light emitted from the light source 31a. The glucose detection part 31 thus both irradiates with light the analysis cartridge 40 placed on the mounting part 22, and receives the light reflected from the irradiated analysis cartridge 40. The analysis cartridge 40 includes a glucose reactant 41 configured by a reagent for changing color through chemical reaction with the glucose in the interstitial fluid collected from the living body. The glucose detection part 31 detects the color change of the glucose reactant 41 based on the change in light absorption, that is, the amount of reflected light, and quantifies the amount of glucose from the amount of reflected light.

The sodium ion detection part 32 is provided on the bottom surface of the mounting part 22. The sodium ion detection part 32 is provided with a rectangular plate-like member disposed on the bottom surface of the mounting part 22, and a pair of electrodes for measuring sodium ion concentration disposed in the approximate center of the plate member. The electrodes for measuring sodium ion concentration include a sodium ion selective electrode configured of silver/silver chloride on a sodium ion selective membrane, and a silver/silver chloride electrode as a common electrode. The sodium ion detection part 22 applies a constant current between the electrodes when filled with sample, and outputs the voltage to the control part 35 as a detection value.

The sodium ion detection part 32 reads the small voltage value of tens of millivolts and outputs the read value as the detection value. The control part 35 measures the concentration of the small amount of sodium ions contained in the several mM concentration in the collection fluid based on the small detection value (voltage value). Therefore, when there is a small change of state on the electrode surface, there is a relatively large change in the detection value (voltage value) with a possibility of a measurement error occurring in regard to the concentration of sodium ions. A change of state may be caused, for example, precipitate adhering to the electrode surface, oxidation of the electrode and the like. The biological component analyzer 20 of the present embodiment is configured to prepare a calibration curve by loading the calibration cartridge 50 in the mounting part 22, and measuring the sodium ion concentration based on the prepared calibration curve. Thus, a highly reliable glucose AUC analysis result can usually be obtained even when there is a change of state of the sodium ion detection part 32.

The control part 35 is built into the biological component analyzer 20, and includes a CPU as the analysis part, ROM as the storage part, RAM and the like. The CPU controls the operation of each part by reading and executing programs stored in the ROM. As will be described later, a biological component contained in a test sample is analyzed by preparing a calibration curve based on the detection value obtained by detecting components in a sample of known concentration housed in the calibration cartridge 50, then analyzing the sample based on the calibration curve and a detection value obtained by detecting the biological component in a test sample housed in the analysis cartridge 40. The RAM is used as the program development area when executing the program stored in the ROM.

The biological component analyzer 20 is provided with a supply part 24 configured by a built-in pump, a tank 27 for accommodating high concentration physiological saline, a tank 28 for accommodating low concentration physiological saline, a tank 29 for accommodating pure water, and a waste tank 25. The supply part 24 is a device for supplying the liquid accommodated in the tans 27 through 29 to the calibration cartridge 50 or analysis cartridge 40 placed in the mounting part 22, and does so by injecting the liquid contained in the tanks 27 through 29 to the calibration cartridge 50 or analysis cartridge 40 placed in the mounting part 22 through a nipple 24a. The pure water accommodated in the tank 29 is used to wash the interior of the apparatus and the collect the interstitial; fluid contained on the collecting body 12 in the analysis cartridge 40. The high concentration physiological saline and low concentration physiological saline accommodated in the tank 27 and tank 28, respectively, are used in the preparation of the calibration curve. The waste tank 25 is configured by a container with a top part that is open to the air, and stores liquid discharged from the calibration cartridge 50 or analysis cartridge 40 through a nipple 25a.

A cover 37 is provided on the top surface of the chassis of the biological component analyzer 20. The waste tank 25 and tanks 27 through 29 within the apparatus are exposed through the opening when the cover 37 is open. The waste tank 25 and tanks 27 through 29 can be removed through this opening. After use, the empty tanks 27 through 29 can be replaced with new tanks. The waste liquid stored in the waste tank 25 can be eliminated by removing the waste tank 25.

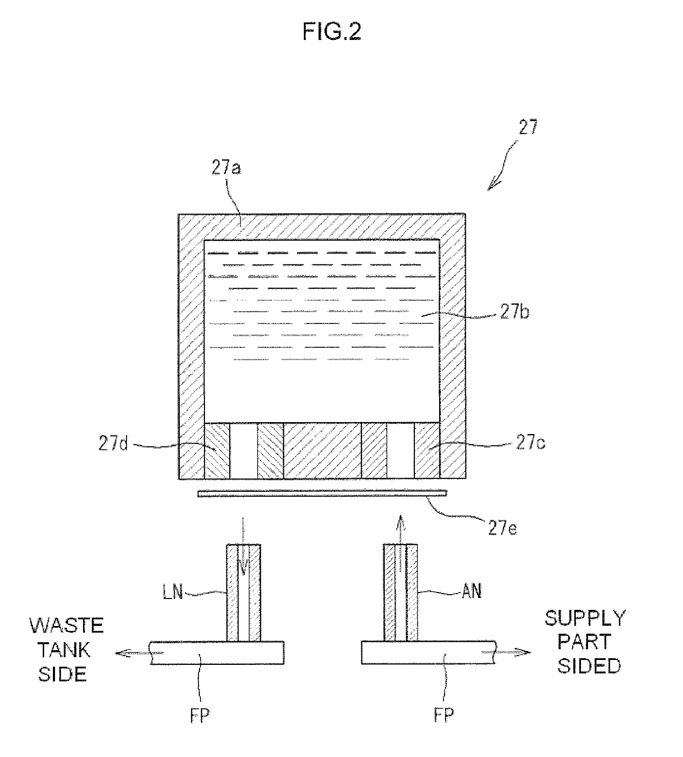

FIG. 2 is a brief cross sectional view showing the tank 27 and biological component analyzer 20 in the connected state. Since tanks 27 through 29 have identical construction, the tank 27 is described an example. The tank 27 is provided with a container 27a formed of synthetic resin, rubber o-rings 27c and 27d disposed at the bottom of the container 27a, filter 27e for closing the opening of the o-rings 27c and 27d, and high concentration physiological saline 27b accommodated in the container 27a.

On the other hand, a flow path FP, extending from the supply part 24 to the waste tank 25, is provided within the biological component analyzer 20. The flow pass FP is provided with a first nipple AN for injecting air from the supply tank 24 to the tank 27, and a second nipple LN for introducing the high concentration physiological saline expelled from the tank 27 to the flow pass FP.

When installing the tank 27, the cover 37 is opened on the top surface of the chassis, and the first nipple An and second nipple LN are exposed. The filter 27e of the tank 27 is inserted inside the opening from below, and the tank 27 is pressed until the first nipple An and second nipple LN protrude through the o-rings 27c and 27d to complete installation. When air is supplied from the supply part 24 with the tank 27 installed, the air is fed to the tank 27 through the first nipple AN and the second nipple LN as indicated by the arrow in the drawing. The air fed to the tank 27 expels the high concentration physiological saline within the tank 27, and the expelled high concentration physiological saline passes through the second nipple LN into the flow pass FP and travels toward the waste tank 25 side.

The capacity of the tanks 27 through 29 is 100 mL. Approximately 1 mL of pure water is used in the collection of interstitial fluid from the collecting body 12, and interstitial fluid can be collected approximately 100 times using the pure water stored in the tank 27. Approximately 1 mL of high concentration physiological saline and the same amount of low concentration physiological saline is used in the preparation of a single calibration curve, and a calibration curve can be prepared approximately 100 times using the high concentration and low concentration physiological saline accommodated in the tanks 28 and 29.

The high concentration physiological saline stored in the tank 27 and the low concentration physiological saline stored in the tank 28 are composed of physiological saline containing a known concentration of sodium ions. The sodium ion concentration (X0) of the low concentration physiological saline is set within a range of, for example, 0.5 to 1.0 mM, and preferably 0.75 mM. The sodium ion concentration (X1) of the high concentration physiological saline is set within a range of, for example, 3.0 to 10.0 mM, and preferably 7 mM. The concentration (X0) and concentration (X1) is stored beforehand in the memory of the control part 35.

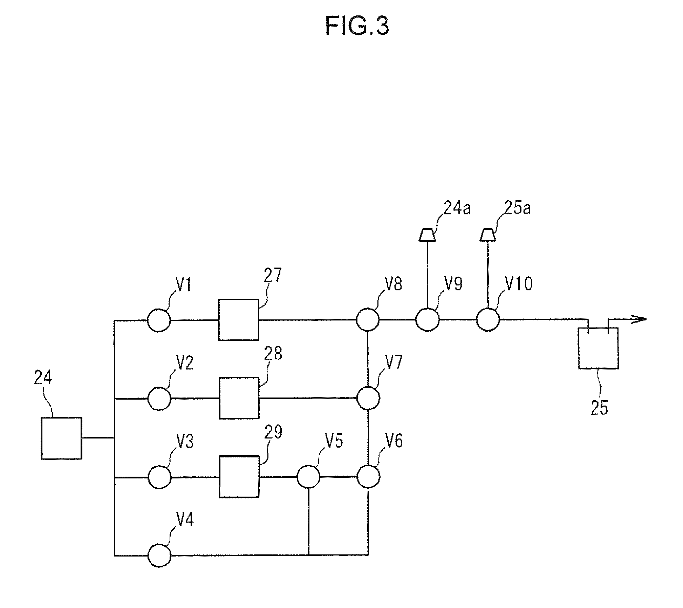

FIG. 3 shows the fluid circuit of the biological component analyzer 20. The biological component analyzer 20 is provided with electromagnetic valves V1 through V10 in addition to the supply part 24, tanks 27 through 29, nipples 24a and 25a, and waste tank 25 described above. The electromagnetic valves V1 through V4 have the function of opening and closing the flow pass. The electromagnetic valves V5 through V10 are three-way valves. Among these, electromagnetic valves V5 through V8 and V10 have a dual inlets and a single outlet, and have the function of switching the flow pass by switching the inlets. The electromagnetic valve V9 has a single inlet and dual outlets, and has the function of switching the flow pass by switching the outlets.

The supply part 24 is connected to the tanks 27 through 29 via the electromagnetic valves V1 through V3. The tank 27 is connected to the nipple 24a via the electromagnetic valves V8 and V9. The tank 27 is also connected to the waste tank 25 through the electromagnetic valves V8, V9, V10. The tank 28 is connected to the nipple 24a via the electromagnetic valves V7, V8 and V9. The tank 28 is also connected to the waste tank 25 through the electromagnetic valves V7, V8, V9, V10. The tank 29 is connected to the nipple 24a via the electromagnetic valves V5, V6, V7, V8 and V9. The tank 28 is also connected to the waste tank 25 through the electromagnetic valves V5, V6, V7, V8, V9, V10.

The supply part 24 is connected to the nipple 24a via the electromagnetic valves V4, V5, V6, V7, V8 and V9. The supply part 24 is also connected to the waste tank 25 through the electromagnetic valves V4, V5, V6, V7, V8, V9, and V10.

The control part 35 of the biological component analyzer 20 executes five processes, that is, a high concentration physiological saline supply process, low concentration physiological saline supply process, pure water supply process, washing process, and pumping process by controlling the supply part 24 and the electromagnetic valves V1 through V10. Details of each process are described below.

(High Concentration Physiological Saline Supply Process)

This process is a process that is executed when supplying high concentration physiological saline to the calibration cartridge installed in the mounting part 22. In this process, the flow pass is first opened from the supply part 24 to the tank 27 through the electromagnetic valve V1 by operating the electromagnetic valve V1. Then, the flow pass is opened from the tank 27 to the nipple 24a through the electromagnetic valves V8 and V9 by operating the electromagnetic valve V8. The flow pass is next opened from the nipple 24a to the waste tank 25 through the electromagnetic valve V10 by operating the electromagnetic valve V10. In this state, when air is fed from the supply part 24, the high concentration physiological saline is supplied from the tank 27 toward the nipple 24a.

Low Concentration Physiological Saline Supply Process)

This process is a process that is executed when supplying low concentration physiological saline to the calibration cartridge installed in the mounting part 22. In this process, the flow pass is first opened from the supply part 24 to the tank 28 through the electromagnetic valve V2 by operating the electromagnetic valve V2. Then, the flow pass is opened from the tank 28 to the nipple 24a through the electromagnetic valves V7, V8 and V9 by operating the electromagnetic valves V7, V8, and V9. The flow pass is next opened from the nipple 24a to the waste tank 25 through the electromagnetic valve V10 by operating the electromagnetic valve V10. In this state, when air is fed from the supply part 24, the low concentration physiological saline is supplied from the tank 28 toward the nipple 24a.

(Pure Water Supply Process)

This process is a process executed when supplying pure water to the analysis cartridge 40 installed in the mounting part 22 to recover the interstitial fluid collected in the collecting body 12, In the analysis by the analysis cartridge 40, the interstitial fluid contained in the gel 12 is collected by the pure water, and the components in the collected interstitial fluid are detected and the component concentrations are measured. To achieve uniform measurement conditions, a fixed amount of pure water is measured and supplied to the analysis cartridge 40 when supplying pure water to collect the interstitial fluid. The process is described in detail below.

In this process, the flow pass is first opened from the supply part 24 to the tank 29 through the electromagnetic valve V3 by operating the electromagnetic valve V3. Then, the flow pass is opened from the tank 29 to the electromagnetic valve V9 through the electromagnetic valves V5 through V8 by operating the electromagnetic valves V5, V6, V7, and V8. The flow pass between the electromagnetic valves V9 and V10 is then opened by operating the electromagnetic valve V9. The flow pass is next opened from the electromagnetic valve V10 to the waste tank 25 by operating the electromagnetic valve V10. In this state, when air is fed from the supply part 24, the pure water moves from the tank 28 toward the waste tank 25 without passing through the analysis cartridge 40. At the same time, the pure water fills the flow pass between electromagnetic valves V5 and V6. The flow pass between the electromagnetic valves V5 and V6 has a capacity to accommodate the fixed amount of pure water required to collect the interstitial fluid. Then, the electromagnetic valve V3 is closed, valve V4 is opened, and the inlet of electromagnetic valve V6 is switched. In this way the flow pass is opened from the supply part 24 to the waste tank 25 without passing through the electromagnetic valves V5 and V6 by operating the electromagnetic valves V4, V6, V7, V8, V9, and V10. In this state, the when air is fed from the supply part 24, the excess pure water downstream of the electromagnetic valve V6 moves to the waste tank 25. The inlet of the electromagnetic valve V5 is switched, and the flow pass is opened from the electromagnetic valves V4 to V6 through electromagnetic valve V5. Then, the outlet of the electromagnetic valve V5 is switched and the flow pass is opened from the electromagnetic valve V8 to the nipple 24a through the electromagnetic valve V9. The inlet of the electromagnetic valve V10 is then switched and the flow pass is opened from the nipple 24a to the waste tank 25 through the electromagnetic valve V10. Therefore, the flow pass is opened from the supply part 24 to the nipple 24a through the electromagnetic valves V4, V5, V6, V7, V8, and V9 by switching the flow pass of the electromagnetic valves V5, V9, and V10. The flow pass is next opened from the nipple 25a to the waste tank 25 by operating the electromagnetic valve V10. In this state, when air is fed from the supply part 24, pure water is moved from the within the flow pass between the electromagnetic valves V5 and V6 toward the nipple 24a. In this way a predetermined amount of pure water is supplied to the analysis cartridge 40.

(Washing Process)

The washing process is executed when washing the flow pass within the cartridge by supplying pure water to the calibration cartridge 50 installed in the mounting part 22. In this process, the flow pass is first opened from the supply part 24 to the tank 29 through the electromagnetic valve V3 by operating the electromagnetic valve V3. Then, the flow pass is opened from the tank 29 to the nipple 24a through the electromagnetic valves V5 through V10 by operating the electromagnetic valves V5, V6, V7, V8, and V9. The flow pass is next opened from the nipple 24a to the waste tank 25 through the electromagnetic valve V10 by operating the electromagnetic valve V10. In this state, when air is fed from the supply part 24, the pure water is supplied from the tank 29 toward the nipple 24a. The pure water supplied to the nipple 24a passes through the interior of the calibration cartridge 50 and flows into the waste tank 25 through the nipple 25a.

(Pumping Process)

This process is executed when pumping the liquid accommodated within the analysis cartridge 40 downstream by supplying air to the analysis cartridge 40 installed in the mounting part 22. In this process, the flow pass is opened from the supply part 24 to the nipple 24a without passing through the tanks 27 through 29 by operating the electromagnetic valves V4, V6, V7, V8, and V9. The flow pass is next opened from the nipple 25a to the waste tank 25 by operating the electromagnetic valve V10. In this state, when air is supplied from the supply part 24, the air pumped from the supply part 24 enters the interior of the cartridge from the nipple 24a, and pumps the liquid within the cartridge in the downstream direction.

In the biological component analyzer 20, the interstitial fluid collection sheet 10 that has been removed from the skin of the subject is affixed to a predetermined location in the analysis cartridge 40 as indicated by the dashed lines in FIG. 1, and the analysis cartridge 40 is placed in the mounting part of the biological component analyzer 20. The biological component analyzer 20 executes a predetermined analysis process on the interstitial fluid collection sheet 10 affixed to the analysis cartridge 40 installed in the mounting part 22, and obtains the glucose concentration and sodium ion concentration in the collecting body 12 of the interstitial fluid collected in the interstitial fluid sheet 10.

(Interstitial Fluid Collection Sheet)

The use of the interstitial fluid collection sheet 10 is described below in a process in which the sheet 10 is affixed to the skin of the subject to collect interstitial fluid from the skin of the subject, then is peeled off from the skin after a predetermined time has elapsed.

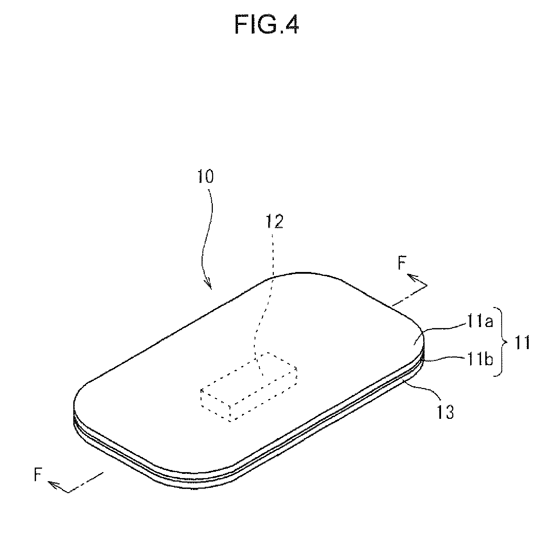

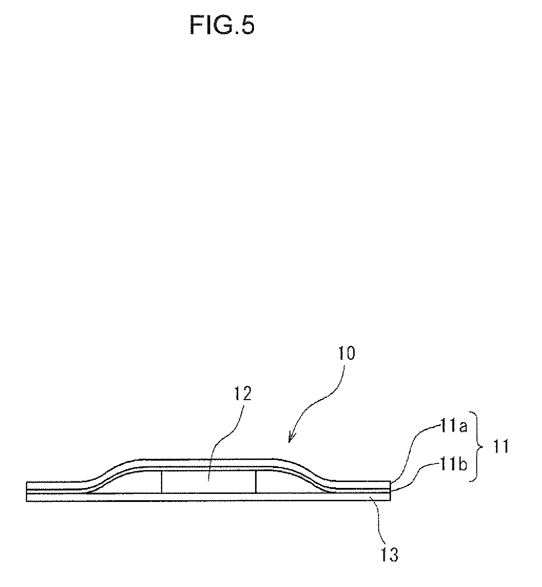

FIG. 4 is a perspective illustration of the interstitial fluid collection sheet 10 provided with a collecting body 12 that is maintained on a retaining sheet 11, and FIG. 5 is a cross sectional view on the F-F line.

The collecting body 12 is configured by a gel having water retention properties that is capable of retaining the interstitial fluid extracted from the skin of the subject. The gel contains pure water that includes potassium ions as an extraction medium. Although the gel is not particularly limited insofar as it possesses the ability of collecting interstitial fluid, a preferred gel is formed of at least one type of hydrophilic polymer selected from a group composed of polyvinyl alcohol and polyvinyl pyrrolidone.

The collecting body 12 has a rectangular shape in the example illustrated in FIGS. 4 and 5, and the size of the surface in contact with the skin measures 7 x 12 mm. Not that the shape and size of the collecting body 12 is not limited to this configuration, however.

The retaining sheet 11 has an oval shaped sheet body 11a, and an adhesive layer 11 b formed on one side of the sheet body 11 a, such that the surface on the side of the adhesive layer 11 b is an adhesive surface. The collecting body 12 has the same oval shape and is positioned at the approximate center of a release sheet 13 that functions as a mounting sheet, and the retaining sheet 11 is affixed to the release sheet 13 so as to cover the collecting body 12. The collecting body 12 is retained on the retaining sheet 11 by part of the adhesive surface of the retaining sheet 11. The area of the retaining sheet 11 is of a size capable of covering the collecting body 12 in order to prevent the collecting body 12 from drying out while collecting interstitial fluid. That is, air tightness is maintained between the skin and the retaining sheet 11 during the collection of the interstitial fluid by covering the collecting body 12 with the retaining sheet 11, thus preventing the evaporation of the moisture in the collecting body 12 during the collection of the interstitial fluid.

The sheet body 11a of the retaining sheet 11 may be colorless and transparent or colored and transparent, so that the collecting body 12 retain ed on the retaining sheet 11 can be easily visually inspected from the surface side (surface on the opposite side from the adhesive layer) of the sheet body 11a. The sheet body 11 a preferably has low moisture permeability to prevent drying out of the collecting body and evaporation of the interstitial fluid. Examples of materials of the sheet body 11 a include polyethylene film, polypropylene film, polyester film, polyurethane film and the like, and among these examples polyethylene film and polyester film are preferred. The thickness of the sheet body 11a is not particularly limited, but is approximately 0.025 to 0.5 mm.

The interstitial fluid collection sheet 10 is affixed to the skin of the subject by the adhesive surface of the retaining sheet 11 so that the collecting body 12 is positioned in the micropore forming region of the subject (a region in which a plurality of micropores are formed in the skin of the subject by a suitable micropore forming means to accelerate the extraction of the interstitial fluid).

The interstitial fluid extracted through the micropores is collected in the collecting body 12 by leaving the collecting body 12 placed on the micropore forming region for a predetermined time, for example, 60 minutes or more, and preferably 180 minutes or more.

(Analysis Cartridge)

The analysis cartridge 40 installed in the mounting part 22 of the biological component analyzer 20 is described below in detail.

FIG. 6A is a plan view showing an example of the analysis cartridge 40 used in the biological component analyzer 20. FIG. 6B is a plan view of the analysis cartridge 40 with the optical waveguide member 70 and glucose reactant 41 removed from the analysis cartridge 40 shown in FIG. 6A. FIG. 6C is a side view of the analysis cartridge 40 viewed from the A direction. FIG. 7A is a cross sectional view on the B-B line of the analysis cartridge 40 shown in FIG. 6, and FIG. 7B is a cross sectional view on the C-C line of same. FIG. 8 is a bottom view of the analysis cartridge 40 illustrated in FIG. 6.

The analysis cartridge 40 is a thin rectangular plate formed of a synthetic resin such as acrylic resin or the like. The front surface of the analysis cartridge 40 is provided with a gel holding part 42, second storage part 43, optical waveguide member 70, and glucose reactant 41 as shown in FIG. 6A. The back surface is provided with a first storage part 44 as shown in FIG. 8.

The gel holding part 42 is a part for positioning the collecting body 12 which is formed of gel or the like for collecting interstitial fluid extracted from the skin of a subject, and the collecting member 12 is positioned in the gel holding part 42 and is held there on the adhesive surface of the retaining sheet 11. That is, after being affixed and removed from the skin of the subject after a predetermined time has elapsed, the retaining sheet 11 is affixed to the front surface of the analysis cartridge 40 so that the collecting body 12 is positioned in the gel holding part 42. The collecting body 12 can be accurately placed at the predetermined position of the gel holding part 42 at this time because the retaining sheet 11 is made of a colorless and transparent material or a colored and transparent material.

The gel holding part 42 is a rectangular concavity. Within this concavity are formed buffer walls 45a and 45b to prevent the outflow of pure water supplied into the concavity. The collecting body 12 is placed in the gel holding part 42 so as to rest on the edges of the buffer walls 45a and 45b. A through hole 46 is formed in one corner among the four corners of the gel holding part 42, and a lateral flow pass 47b is formed in the opposite corner disposed diagonally from the corner of the through hole 46, and this lateral flow pass 47b communicates with the first storage part 44 on the back surface via a vertical flow pass 47a (refer to FIG. 7). The through hole 46 is formed at a position that communicates with the nipple 24a that is connected to the supply part 24, when the analysis cartridge 40 is installed in the mounting part 22.

The second storage part 43 is configured by a rectangular first concavity 43a, and a second concavity 43b, which is disposed near the center of the first concavity 43a and is deeper than the first concavity 43a. A vertical flow pass 48 (refer to FIG. 7) is formed in one corner among the four corners of the second concavity 43b and communicates with the first storage part 44 provided on the back surface, and a through hole 49 is formed in the opposite corner disposed diagonally from the corner of the through hole 48. The through hole 49 is formed at a position that communicates with the nipple 25a that is connected to the waste tank 25.

The open face of the first concavity 43a of the second storage part 43 is sealed by the optical waveguide member 70 (refer to FIG. 12). The optical waveguide member 70 has light transmittancy characteristics that form an optical waveguide within the member. When the optical waveguide member 70 is irradiated with light, the irradiating light is repeatedly reflected in the internal optical waveguide before exiting from the optical waveguide member. A glucose reactant 41 composed of a glucose measurement medium is provided on the back surface of the optical waveguide member 70. The glucose reactant 41 contains GOD,$H_2O_2$. POD and color-producing agent. The glucose reactant 41 produces a chemical reaction when in the presence of the glucose contained in the interstitial fluid, and changes color in accordance with the degree of reaction. Glucose+$O_2$+$H_2O$→(catalyzed by GOD)→gluconate+$H_2O_2$ $H_2O_2$+color-producing agent→catalyzed by POD)→$2H_2O$+color-producing agent (colored oxide).

The glucose detection part 31 detects the degree of coloration of the glucose reactant 41 and outputs a detection signal. Specifically, the glucose detection part 31 irradiates light from the light source 31 a toward the optical waveguide member 70, and the light receiving part 31 b receives the light emitted from the optical waveguide member 70. When light is emitted from the light source 31 a, the light is absorbed by the colored glucose reactant 41 and repeatedly reflected within the optical waveguide member 70, then impinges the light receiving part 31 b. Thus, the amount of light received by the light receiving part 31 b is proportional to the degree of coloration of the glucose reactant 41, and, hence, the amount of glucose in the collection liquid. The glucose detection part 31 is configured to output a detection signal corresponding to the amount of received light to the control part 35. When the amount of light included in this detection signal is received, the control part 35 obtains the glucose concentration based on the calibration curve previously stored in the memory of the control part 35.

As shown in FIG. 8, the first storage part 44 is a circular concavity, and within this concavity are formed a circular first convexity 44a and a circular second convexity 44b. The first convexity 44a and second convexity 44b may be covered entirely by the liquid of the first storage part 44 depending on the change in the flowing liquid.

A first lateral flow pass 44c is formed in the outer diameter direction at the margin on the first convexity 44a side so as to communicate with the gel holding part 42 through the previously mentioned vertical flow pass 47a. A second lateral flow pass 44d is formed in the outer diameter direction at the margin on the second convexity 44b side so as to communicate with the second storage part 43 through the previously mentioned vertical flow pass 48.

In this way the analysis cartridge 40 has a fluid flow pass configured by the through hole 46, gel holding part 42, lateral flow pass 47b, vertical flow pass 47a, first lateral flow pass 44c, first storage part 44, second lateral flow pass 44d, vertical flow pass 48, second storage part 43, and through hole 49, so that the nipple 24a and nipple 25a communicate via this flow pass.

A semicircular notch 40a is formed in the front surface of the analysis cartridge 40, and more specifically is formed in the margin of the long side of the rectangular cartridge, to identify the type of cartridge. The notch 40a is formed at a position corresponding to the pin switch 60b provided on the back surface 23b of the movable top plate 23 when the analysis cartridge 40 is installed in the mounting part 22 of the biological component analyzer 20 and the movable top plate 23 is closed. The notch 40a has a depth sufficient to avoid contact with the tip of the pin switch 60b when the movable top plate 23 is closed.

The analysis cartridge 40 may be disposable, so as to be discarded with the gel accommodated in the gel holding part 42 after removal from the mounting part 22 after analysis has been completed.

(Calibration Cartridge)

The calibration cartridge 50 installed in the mounting part 22 of the biological component analyzer 20 is described below in detail.

FIG. 9A is a plan view showing an example of the calibration cartridge 50 used in the biological component analyzer 20. FIG. 9B is a plan view of the calibration cartridge 50 with the optical system confirmation unit 80 removed from the calibration cartridge 50 shown in FIG. 9A. FIG. 9C is a side view of the calibration cartridge 50 viewed from the D direction. FIG. 10 is a cross sectional view on the E-E line of the calibration cartridge 50 shown in FIG. 9, and FIG. 11 is a bottom view of the calibration cartridge 50 shown in FIG. 9.

The calibration cartridge 50 is a thin rectangular plate formed of synthetic resin such as acrylic resin and the same size as the previously described analysis cartridge 40. The front surface of the calibration cartridge 50 is provided with a curved lateral flow pass 51, second storage part 53, and optical system confirmation unit 80 as shown in FIG. 9A. As can be readily understood from FIG. 9A although omitted from the drawing, the opening of the lateral flow pass 51 is closed by a seal to prevent leakage.
The back surface is provided with a second storage part 54 as shown in FIG. 11. The calibration cartridge 50 is not provided with a gel holding part for accommodating a gel, unlike the analysis cartridge 40.

A through hole 56 is formed at one end of the lateral flow pass 51, and a vertical flow pass 57 (refer to FIG. 10) is connected thereto and further communicates with the storage part 54 at the other end. The through hole 56 is formed at a position that communicates with the nipple 24a that is connected to the supply part 24, when the calibration cartridge 50 is installed in the mounting part 22.

The second storage part 53 is configured by a rectangular first concavity 53a, and a second concavity 53b, which is disposed near the center of the first concavity 53a and is deeper than the first concavity 43a, similar to the second storage part 43 of the analysis cartridge 40. A vertical flow pass 58 (refer to FIG. 10) is formed in one corner among the four corners of the second concavity 53b at the center and communicates with the first storage part 54 provided on the back surface, and a through hole 59 is formed in the opposite corner disposed diagonally from the corner of the through hole 58. The through hole 59 is formed at a position that communicates with the nipple 25a that is connected to the waste tank 25.

The optical system confirmation unit 80 is disposed so as to close the opening of the first concavity 53a (refer to FIG. 13). The optical system confirmation unit 80 is made of a member having light transmittancy characteristics that form a waveguide within the member. When the optical system confirmation unit 80 is irradiated with light of a predetermined intensity emitted from the light source 31a of the glucose detection part 31, the irradiating light is repeatedly reflected in the internal optical waveguide before exiting from the optical waveguide member as light of a predetermined intensity. Whether the light source 31 a and light receiving part 31 b are operating properly can be confirmed using the optical system confirmation unit 80 of this configuration. The back surface of the optical system confirmation unit 80 of the calibration cartridge 50 is provided with a glucose reactant 41 that differs from the analysis cartridge 40.

As shown in FIG. 11, the storage part 54 is a circular concavity, and within this concavity is formed a circular convexity 54a. The convexity 54a has the function of covering the storage part 54 entirely by the liquid depending on the change in the flowing liquid.

A first lateral flow pass 54c is formed in the outer diameter direction at the margin on the concavity of the storage part 54 so as to communicate with the lateral flow pass 51 through the previously mentioned vertical flow pass 57. A second lateral flow pass 54d is formed in the outer diameter direction on the opposite side of the first lateral flow pass 54c so as to communicate with the optical system confirmation unit 80 through the previously mentioned vertical flow pass 58.

The calibration cartridge 50 has a fluid flow pass configured by the through hole 56, lateral flow pass 51, vertical flow pass 57, storage part 54, vertical flow pass 58, optical system confirmation unit 80, and through hole 59, so that the nipple 24a and nipple 25a communicate via this flow pass.

A semicircular notch 50a is formed in the front surface of the calibration cartridge 50, and more specifically is formed in the margin of the long side of the rectangular cartridge, to identify the type of cartridge. The notch 50a is formed at a position corresponding to the pin switch 60a provided on the back surface 23b of the movable top plate 23 when the calibration cartridge 50 is installed in the mounting part 22 of the biological component analyzer 20 and the movable top plate 23 is closed. The depth of the notch 50a is set so as to avoid contact with the tip of the pin switch 60a when the movable top plate 23 is closed.

The notch 50a of the calibration cartridge 50 and the notch 40a of the analysis cartridge 40 are formed at different positions in the length direction of the cartridge as can be understood from FIGS. 6 and 9. More specifically, the notch 50a of the calibration cartridge 50 is positioned nearer the center in the length direction of the cartridge than the notch 40a of the analysis cartridge 40.

The calibration cartridge 50 may be removed from the mounting part 22 after the calibration operation is completed, so as to be reused. In the present embodiment as described above, the calibration cartridge 50 does not contain the consumable parts such as the low concentration physiological saline and the high concentration physiological saline because the supply part 24 and tanks 27 through 29 are provided in the biological component analyzer 20. Therefore, the calibration cartridge 50 of the present embodiment can be reused.


(Analysis Flow)


The flow of the biological component analysis operation performed using the biological component analyzer 20 is described below.
FIG. 14 is a flow chart showing the flow of the process executed by the control part 35 of the biological component analyzer 20, FIG. 15 is a flow chart of the calibration curve preparation process, and FIG. 16 is a flow chart of the analysis process.

First, prior to the processing by the control part 35, the user raises the movable top plate 23 of the biological component analyzer 20 and installs the analysis cartridge 40 or the calibration cartridge 50 in the exposed mounting part 22, then closes the movable top plate 23.

In step S1, the control part 35 determines whether the user has pressed the measurement start button 34. When the control part 35 determines that the measurement start button has been pressed, the process moves to step S2.

In step S2, the control part 35 then determines whether a cartridge has been properly installed. In the present embodiment, notches 40a and 50a are provided as identifying parts on the analysis cartridge 40 and the calibration cartridge 50, and the notches 40a and 50a are provided at different positions in the length direction of the cartridges. The back surface of the movable top plate 23 of the biological component analyzer 20 is provided with pin switches 60a and 60b which correspond to the notches 40a and 50a, respectively. In the present embodiment, therefore, when the analysis cartridge 40 or calibration cartridge 50 has been properly installed in the mounting part 22, one or another of the pin switches 60a and 60b is pressed by the surface of the cartridge and retracted into the movable top plate 23. When the switch 60a is pressed but the switch 60b is not pressed, the control part 35 determines that the analysis cartridge 40 is installed, whereas the control part 35 determines that the calibration cartridge 50 has been installed when the switch 60b is pressed but the switch 60a is not pressed.

Thus, it is possible to determine that a cartridge is properly installed in the mounting part 22 and identify the type of installed cartridge by providing the notches are different position on the cartridge and providing switches to correspond to the notches. Specifically, both switches 60a and 60b are pressed when the cartridge is installed up side down or reversed front to back and the movable top plate 23 is closed. When the movable top plate is closed and the user has forgotten to install a cartridge, neither switch 60a or 60b is pressed. When both switches 60a and 60b are pressed, and when neither switch 60a or 60b is pressed, the control part 35 determines that the cartridge is improperly installed (including when the cartridge is incompletely installed in the mounting part 22).

When the control part 35 determines that the cartridge is not properly installed in the mounting part 22 in step S2, the process moves to step S3 and an error message is displayed on the display part 33. When the control part 35 determines that the cartridge is properly installed in the mounting part 22 in step S2, the process moves to step S4, and the control part 35 determines whether the installed cartridge is the analysis cartridge in step S4.

When the control part 35 determines that the cartridge installed in the mounting part 22 is the analysis cartridge 40 in step S4, the process moves to step S5 and the analysis process (described later) is executed in step S5. On the other hand, when the control part 35 determines that the cartridge installed in the mounting part 22 is not the analysis cartridge 40 in step S4, that is, the control part 35 determines the installed cartridge is the calibration cartridge 50, the process moves to step S7 and the calibration process (described later) is executed in step S7.

When the analysis process ends in step S5, the control part 35 displays the analysis result on the display part 33 in step S6.

On the other hand, when the calibration curve preparation process ends in step S7, the control part 35 confirms the operation of the light source 31 a and light receiving part 31 b of the glucose detection part 31 in step S8. Specifically, light of a predetermined intensity irradiates the optical system confirmation unit 80 that has a predetermined reflectivity received by the optical system confirmation unit 80 from the light source 31a of the glucose detection part 31, and light emitted from the optical system confirmation unit 80 is received by the light receiving part 31 b. The glucose detection part 31 outputs a detection signal corresponding to the amount of received light to the control part 35. The control part 35 determines whether the amount of received light included in the detection signal is within a predetermined range in step S9-1. Since the optical system confirmation unit 80 is configured to emit light of a predetermined intensity when light of a predetermined intensity has been emitted, when the light received by the light receiving part 31 b is not within the predetermined range, the intensity of the light emitted from the light source 31 a is judged to be abnormal, or the sensitivity of the light receiving part 31 b is judged to be abnormal and either case is considered an abnormality. The control part 35 ends the process when the amount of light received is not within the predetermined range. The control part 35 moves the process to step S9-2 when the amount of light received is not within the predetermined range,and displays an error message on the display part 33.

(Analysis Process)

FIG. 15 is a flow chart of the analysis process performed in step S5. FIG. 12 is a cross sectional view of the analysis cartridge 40 installed in the biological component analyzer 20. It will be readily noted that shape and size of the gel holding part, the first storage part and second storage part are exaggerated in FIGS. 12 and 13.

In step S10, the control part 35 executes the previously mentioned pure water supply process to supply a predetermined amount of pure water to the analysis cartridge 40.

Then, in step S11, the control part 35 determines whether a predetermined time (for example, 10 minutes) has elapsed since the end of the operation supplying of the predetermined amount of pure water to the analysis cartridge 40. The process advances to step S12 when the control part 35 determines that the predetermined time (for example, 10 minutes) has elapsed sine the end of the operation supplying pure water to the analysis cartridge 40. The collecting body 12 is immersed in the pure water during the predetermined time, and the interstitial fluid extracted from the skin of the subject that had been collected in the gel is collected in the pure water. The collection of the interstitial fluid means the diffusion of the interstitial fluid in the pure water.

Then, in step S12, the control part 35 executes the pumping process mentioned previously to supply air to the analysis cartridge 40 and move the liquid stored in the gel holding part 42 to the first storage part 44 and second storage part 43. Thus, the glucose contained in the liquid in the second storage part 43 reacts with the glucose reactant 41, and the glucose reactant 41 changes color.

In step S13, the voltage v between the pair of electrodes for measuring the concentration of sodium ions is measured by the sodium ion detection part 32. The sodium ion detection part 32 outputs a detection signal corresponding to the voltage v to the control part 35. The light source 31 a of the glucose detection part 31 then irradiates the optical waveguide member 70 and the light emitted from the optical waveguide member 70 is received by the light receiving part 31 b. The glucose detection part 31 outputs a detection signal corresponding to the amount of received light to the control part 35.

Then, in step S14, the control part 35 analyzes the glucose concentration and sodium ion concentration. The control part 35 reads relational expression (calibration curve) of equation (1) below from the memory part.

$$X = exp\{(v - d) / c\} - (m \times k) \quad \cdots \cdots (1)$$

The control part 35 substitutes the voltage v in equation (1) and calculates the sodium ion concentration based on the detection signal output from the sodium ion detection part 32. Equation (1) is a relational expression (calibration curve) prepared by the calibration curve preparation process (described later), and will be described in detail later. The control part 35 also reads the relational expression (calibration curve) which stipulates the relationship between the amount of received light and the glucose concentration. The control part 35 calculates the glucose concentration using the amount of received light included in the detection signal output from the glucose detection part 31 in the relational expression read from memory.

In step S15, the control part 35 calculates the glucose-time area under the curve (glucose AUC) in the body of the subject based on the sodium ion concentration and glucose concentration obtained in step S14.

Since the sodium ion concentration in the body is considered to be constant rather than changing over time or varying person to person, the total amount of sodium ions obtained per unit time can be considered to represent the glucose permeability (P) of the readily collected interstitial fluid. Accordingly, when the sodium ion concentration is designated Na, the collection body (gel) volume is designated vol, and the interstitial fluid extraction time is designated t, the glucose permeability (P) can be represented as

$$P = a \times (Na \times vol / t) + b \quad \cdots \cdots (2)$$

where a and b are constants determined by experimentation.

Since the amount of glucose (Glc) obtained by measurement is the product of glucose permeability (P) and total glucose (AUC) in the body, the amount of glucose (Glc) can be determined by equation (3) below.

$$AUC = Glc \times vol / P \quad \cdots \cdots (3)$$

Combining equation (2) and equation (3) we obtain the hollowing.

$$AUC = Glc \times vol / \{a \times (Na \times vol / t) + b\}$$

Then, the glucose AUC (units: concentration x time) can be calculated based on the glucose concentration and sodium ion concentration.

Then, in step S16, the control part 35 executes the previously described pumping process to move the liquid accommodated in the first storage part 44 and second storage part 43 to the waste tank 25.

(Calibration Curve Preparation Process)

FIG. 16 is a flow chart of the calibration curve preparation process in step S7. FIG. 13 is a cross sectional view of the calibration cartridge 50 installed in the biological component analyzer 20.
In the present embodiment, "preparation of the calibration curve" means the preparation of the relational expression between the detection value obtained by the detection part detecting the components in the known concentration sample in the calibration cartridge and the component concentration and detection value obtained by the detection part based on the component concentration in the known concentration sample.

In step S20, the control part 35 resets the variable [i] to [0]. In step S21, the control part 35 executes the previously mentioned washing process to wash the storage part 54 of the calibration cartridge 50.

In step S22, the control part 35 executes the previously mentioned low concentration physiological saline supply process to move low concentration physiological saline to the storage part 54.

In step S23, the voltage (V0) between the pair of electrodes for measuring the concentration of sodium ions is measured by the sodium ion detection part 32.
In step S24, the control part 35 executes the washing process to wash the storage part 54 of the calibration cartridge 50.

In step S25, the control part 35 executes the previously mentioned high concentration physiological saline supply process to move high concentration physiological saline to the storage part 54.

In step S26, the voltage (V1) between the pair of electrodes for measuring the concentration of sodium ions is measured by the sodium ion detection part 32.
Then, similar to step S21, the control part 35 executes the previously mentioned washing process to wash the storage part 54 of the calibration cartridge 50.

In step S28, the control part 35 determines whether the measured voltages V0 and V1 are within a predetermined range. The predetermined range in the calibration curve preparation process is the range in which the voltage value does not generate an error, for example, V0 may be a range of -50 to -100 mV, and V1 may be a range of 0 to 50 mV. The control part 35 advances the process to step S29 when it determines that V0 and V1 are within the predetermined range. On the other hand, the control part 35 moves the process to step S30 when it determines that only one value among V0 and V1 is within the predetermined range.

In step S30, the control part 35 determines whether the variable [i] is [1] or greater; when [i] is less than [1], the process moves to step S31, a process is executed in step S31 to increment the variable i by [1] ([i]+[1]), and the process returns to step S21, whereupon the processes of steps S21 through S28 are repeated. On the other hand, when the control part 35 determines that the variable [i] is [1] or greater, the process moves to step S32, and an error message is displayed on the display part 33. When the variable [i] is [1] or greater, that is, when the voltage is not in the normal range for two consecutive times, the electrodes of the sodium ion detection part 32 are considered to have deteriorated to a degree that is inappropriate for the preparation of the calibration curve. In this case, an error message is displayed to inform the user to repair the biological component analyzer 20.

In step S29, the control part 35 prepares the calibration curve based on the measured voltage values v0 and v1 and the concentration X0 of the low concentration physiological saline, and the concentration X1 of the high concentration physiological saline stored in the memory. The process is described in detail below.

When the sodium selective electrode is used, the logarithm of sodium ion concentration in the liquid that is generally used is known to be proportional to the voltage of the liquid. Therefore, the relationship between the liquid voltage value v and the logarithm log of the sodium ion concentration can be expressed using unknowns c and d.

$$v = c \times log(X) + d \qquad \cdots \cdots (4)$$

Equation (4) can be expressed below.

$$X = exp\{(v - d) / c\} \qquad \cdots \cdots (5)$$

Other than sodium ions, potassium (K) ions$^+$ and the like are included in the interstitial fluid extracted from the skin of the subject (ions other than sodium in the interstitial fluid extracted from the skin of the subject are referred to as "interference ions" hereinafter). As a result, the influence of interference ions must be excluded since the voltage value is raised that amount as indicated by the dashed line relative to the true sodium ion concentration represented by the solid line as shown schematically in FIG. 17. When interference ions (concentration k) are present, the interference ratio can be designated m ($0<m<1$) and the output result is a value with the product of m and k added. To exclude the influence of interference ions, the relational equation (calibration curve) for determining the true sodium ion concentration (X), that is,

$$X = exp \{(v-d)/c\} - (m \times k)$$

obtains equation (1) above. In the present embodiment, the interference ratio m and the interference ion concentration k is equal to the value previously determined by experiment. Therefore, equation (6) is obtained by determining the unknowns c and d.

$$v = c \times log (X) + d \qquad \cdots\cdots (6)$$

The control part 35 substitutes the voltage value v0 obtained when using the low concentration physiological saline X0, and the voltage value v1 obtained when using the high concentration physiological saline X1 to obtain equations (7) and (8) below.

$$V0 = c \times log (X0) + d \qquad \cdots\cdots (7)$$

$$V1 = c \times log (X1) + d \qquad \cdots\cdots (8)$$

The control part 35 obtains equation (6) to determine the unknown c and d by simultaneously solving the equations (7) and (8). The control part 35 overrides the relational expression (calibration curve) stored in memory with the prepared relational expression (calibration curve), and the process ends. In the subsequent analysis process, the overlaid relational expression is read and used to calculate the sodium ion concentration.

(Other Modifications)

Note that the present invention is not limited to the embodiment described above, and may be variously modified. For example, although a sample (physiological saline) of known concentration is supplied from the tank to the calibration cartridge in the embodiment described above, a sample of known concentration may be loaded beforehand in the calibration cartridge. In this case, samples of known concentration with two types of concentration (low concentration physiological saline and high concentration physiological saline) may be included in a single calibration cartridge, or alternatively, a cartridge containing a sample of known low concentration and a cartridge containing a sample of known high concentration may be provided separately.

Although a sample of known low concentration and a sample of known high concentration are supplied to the same cartridge in the embodiment described above, separate cartridges may be used to supply a sample of known low concentration and to supply a sample of known high concentration.

The sample of known concentration is not limited to being provided within the apparatus as described in the above embodiment, since the sample of known concentration also may be supplied to the calibration cartridge from a peripheral part when such a peripheral part is provided outside the biological component analyzer.

In the above embodiment, the type of cartridge placed in the mounting part is discriminated by detecting an identification part provided on the analysis cartridge and the calibration cartridge via a detection part. However, the type of cartridge placed in the mounting part also may be discriminated by, for example, user input from an input part provided on the biological component analyzer.

Although both the analysis cartridge and the calibration cartridge have identification parts in the above embodiment, both cartridges also may be identified by providing either cartridge with an identification part.

Although a notch formed in the edge of the cartridge is used as an identification part in the above embodiment, a concavity or depression, for example, also may be formed in the surface (a location disposed a predetermined distance from the edge toward the interior) of the cartridge.

The identification part is not limited to a concavity or depression, inasmuch as, for example, a convexity or projection may be formed in the surface of the cartridge as an identification part.

In the above embodiment, a calibration curve is prepared using two sample of known concentration having two concentrations composed of low concentration physiological saline and high concentration physiological saline. However, the present invention is not limited to this arrangement. For example, a calibration curve also may be prepared using a single sample of known concentration. An example of this case follows.

A point located by a detection value (v0')-concentration (X0') is designated fixed point (p0) beforehand. A variable point (p1) located by a concentration (X1') and detection value (v1') is determined by obtaining the detection value (v1') using the sample of known concentration. The calibration curve is prepared by determining the linear equation passing through p0 and p1.

In another modification, three samples of known concentration may be used to prepare the calibration curve.

Although a pin switch protruding from the back surface of the movable top plate is used as the detection part for detecting the identification part in the above embodiment, the switch also may protrude from the bottom surface of the concavity 21. Other than a mechanical switch, the detection part also may be an optical sensor, magnetic sensor or other detection means. For example, when using a magnetic sensor as the detection part, a magnet may be provided on the surface of the cartridge as the identification part.

**Claims**

1. An apparatus for analyzing a biological component in a test sample, comprising:

    a mounting part for selectively mounting a calibration cartridge which is configured for accommodating a control sample that includes a component of predetermined concentration, and an analysis cartridge which contains an analyzing reagent and is configured for accommodating a test sample;
    a detection part for detecting the component included in the control sample accommodated in the calibration cartridge, the component included in the test sample accommodated in the analysis cartridge, and the biological component included in the analysis cartridge; and
    an analyzing part for analyzing the biological component included in the test sample based on a detection result of the component included in the control sample, a detection result of the component included in the test sample, and a detection result of the biological component included in the test sample detected by the detection part.

2. The apparatus of claim 1, further comprising:

    a supply part for supplying the control sample to the calibration cartridge.

3. The apparatus of claim 2, wherein
    the supply part supplies a first control sample containing the component having a first concentration, and supplies a second control sample containing the component having a second concentration that is higher than the first concentration, to the calibration cartridge installed in the mounting part.

4. The apparatus of claim 3, wherein
    the supply part supplies the second control sample after supplying the first control sample and detecting the component contained in the first control sample.

5. The apparatus of any one of claims 1 to 4, wherein
    the analyzing part prepares a calibration curve based on the detection result of the component contained in the control sample, and analyzes the biological component contained in the test sample based on the calibration curve and the detection result of the component contained in the test sample.

6. The apparatus of claim 5, further comprising:

    a detection part for detecting the type of cartridge, wherein
    at least one of the calibration cartridge and the analysis cartridge is provided with an identification part for the detection part to identify the type of cartridge; and
    the analyzing part discriminates the type of cartridge installed in the mounting part based on the detection result of the detection part, and prepares the calibration curve when the cartridge installed in the mounting part is identified as the calibration cartridge, and
    the analyzing part discriminates that the cartridge installed in the mounting part is the analysis cartridge based on the detection result of the detection part, and analyzes the biological component contained in the test sample contained in the analysis cartridge.

**7.** The apparatus of claim 6, wherein
the calibration cartridge is provided with a first identification part, and the analysis cartridge is provided with a different second identification part; and
the analyzing part discriminates that the cartridge installed in the mounting part is the calibration cartridge when the detection part detects the first identification part, and discriminates that the cartridge installed in the mounting part is the analysis cartridge when the detection part detects the second identification part.

**8.** The apparatus of claim 6 or claim 7, wherein
the identification part is a concavity formed in the surface of the cartridge;
the detection part comprises a switch that is accommodatable in the concavity when the cartridge is installed in the mounting part; and
the analyzing part discriminates the type of cartridge based on the state of contact between the switch and the cartridge.

**9.** The apparatus of any one of claims 1 to 9, wherein
the calibration cartridge comprises an optical system confirmation part for emitting light of a predetermined intensity and irradiating light of the predetermined intensity;
the detection part comprises a light source for emitting light on the optical system confirmation part, and a light receiving part for receiving the light emitted from the optical system confirmation part; and
the analyzing part confirms the condition of the detection part based on the amount of light received by the light receiving part.

**10.** The apparatus of any one of claims 1 to 9, wherein
the detection part comprises a first detection unit for detecting the component, and a second detection unit for detecting the biological component.

**11.** The apparatus of claim 10, wherein
the analyzing part prepares a calibration curve based on the detection result of the component contained in the control sample detected by the first detection unit, obtains the amount of the component contained in the test sample based on the calibration curve and the detection result of the component contained in the test sample detected by the first detection part, and analyzes the biological component contained in the test sample based on the detection result of the biological component contained in the test sample detected by the second detection part and the component contained in the test sample.

**12.** The apparatus of claim 11, wherein
the amount of the component is an amount of a sodium ion; and
the detection result of the biological component is an amount of glucose.

**13.** The apparatus of any one of claims 1 to 12, wherein
the analyzing part calibrates the detection part based on the detection result of the component contained in the control sample, and obtains the detection result of the component contained in the test sample by the calibrated detection part detecting the component contained in the test sample accommodated in the analysis cartridge.

**14.** A calibration cartridge comprising:

a holding part for accommodating a control sample containing a component of known concentration; and
an identification part for identifying the type of cartridge.

**15.** The cartridge of claim 14, wherein
the identification part is a concavity formed in a surface of the cartridge;
and
the concavity is a notch formed in the edge of the long side of a rectangular cartridge.

# FIG.1

FIG.2

# FIG.3

# FIG.4

FIG.5

FIG.6A

FIG.6B

FIG.6C

FIG.7A

FIG.7B

# FIG.8

## FIG.9A

## FIG.9B

## FIG.9C

FIG.10

# FIG.11

FIG.12

EP 2 366 999 A2

FIG.13

EP 2 366 999 A2

# FIG.14

```
           START ◄──────────┐
             │              │
             ▼              │
          MEASUREMENT ──NO──┘   S1
          START BUTTON
          PRESSED ?
             │
            YES
             │
             ▼
          CARTRIDGE ──NO──►  DISPLAY ERROR      S3
          PROPERLY              MESSAGE ON
          INSTALLED ?    S2     DISPLAY PART
             │
            YES
             │
             ▼
          ANALYSIS ──NO──►  CALIBRATION CURVE    S7
          CARTRIDGE?  S4     PREPARATION
             │               PROCESS
             │
             ▼                    │
      ANALYSIS PROCESS  S5        ▼
             │            CHECK LIGHT
             ▼            SOURCE AND       S8
      DISPLAY ANALYSIS   LIGHT RECEIVING
      RESULTS      S6     PART
             │                │
             │                ▼
             │         LIGHT WITHIN ──NO──┐  S9-1
             │         PREDETERMINED
             │         RANGE?
             │            YES               │
             │◄────────────┘                ▼
             ▼                       DISPLAY ERROR
            END              S9-2    MESSAGE ON
                                     DISPLAY PART
```

## FIG.15

```
        ┌──────────────────────┐
        │   ANALYSIS PROCESS   │
        └──────────┬───────────┘
                   │
        ┌──────────▼───────────┐
        │  PURE WATER SUPPLY   │ ～S10
        │      PROCESS         │
        └──────────┬───────────┘
                   │
         ◄─────┐   │
    NO         ◄───▼──────────────┐
         ◄──── PREDETERMINED TIME  ～S11
               ELAPSED?
                   │
                  YES
        ┌──────────▼───────────┐
        │   PUMPING PROCESS    │ ～S12
        └──────────┬───────────┘
                   │
  ┌────────────────▼────────────────────┐
  │ MEASURE VOLTAGE BY Na DETECTION PART,│
  │   MEASURE REFLECTED LIGHT BY Glc     │ ～S13
  │         DETECTION PART               │
  └────────────────┬────────────────────┘
                   │
  ┌────────────────▼────────────────────┐
  │   ANALYZE Na ION CONCENTRATION       │
  │              AND                     │ ～S14
  │        Glc CONCENTRATION             │
  └────────────────┬────────────────────┘
                   │
  ┌────────────────▼────────────────────┐
  │  CALCULATE GLUCOSE AUC BASED ON Glc  │
  │          CONCENTRATION               │
  │              AND                     │ ～S15
  │        Na ION CONCENTRATION          │
  └────────────────┬────────────────────┘
                   │
        ┌──────────▼───────────┐
        │   PUMPING PROCESS    │ ～S16
        └──────────┬───────────┘
                   │
             ┌─────▼──────┐
             │   RETURN   │
             └────────────┘
```

## FIG.16

```
                CALIBRATION CURVE
               PREPARATIONPROCESS
                                                     S20
                        ↓
                      i=0
                        ↓ ←────────────────────────────────┐
               WASHING PROCESS          S21                 │
                        ↓                                   │
               LOW CONCENTRATION (X0)    S22                │
          PHYSIOLOGICAL SALINE SUPPLY PROCESS               │
                        ↓                                   │
                 MEASURE VOLTAGE (V0)    S23                │
                 BY Na DETECTION PART                       │
                        ↓                S24                │
               WASHING PROCESS                             │
                        ↓                                   │
               HIGH CONCENTRATION (X1)   S25        S31     │
          PHYSIOLOGICAL SALINE SUPPLY PROCESS               │
                        ↓                         ┌─────────┤
                 MEASURE VOLTAGE (V1)    S26      │ i = i+1 │
                 BY Na DETECTION PART             └─────────┘
                        ↓                S27           ↑
               WASHING PROCESS                         │
                        ↓                S28           │
              VO AND V1 WITHIN                         │
          PREDETERMINED RANGE?        NO      S30      │
                        │YES              ┌──────────┐ │
                                          │  i ≥ 1?  │─┘NO
              SIMULTANEOUSLY SOLVE        └──────────┘
              VO=C x log(X0)+d   (7)          ↓YES
              V1=C x log(X1)+d   (8)
                    AND                      DISPLAY
          PREPARE CALIBRATION CURVE      ERROR MESSAGE
           X=exp((V-d)/C)-m x k          ON DISPLAY PART
                        │                        │
      S29               ↓                        │       S32
                        ↓←───────────────────────┘
                    RETURN
```

$$V0 = C \times \log(X0) + d \quad (7)$$
$$V1 = C \times \log(X1) + d \quad (8)$$
$$X = \exp((V-d)/C) - m \times k$$

FIG.17

**EP 2 366 999 A2**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• WO 2010013808 A